(19) Europäisches Patentamt
European Patent Office
Office européen des brevets

(11) Veröffentlichungsnummer: **0 033 903**
**A1**

(12) # EUROPÄISCHE PATENTANMELDUNG

(21) Anmeldenummer: **81100614.7**

(22) Anmeldetag: **28.01.81**

(51) Int. Cl.³: **C 02 F 1/58**, B 01 D 21/01

(30) Priorität: **09.02.80 DE 3004825**

(43) Veröffentlichungstag der Anmeldung: **19.08.81**
**Patentblatt 81/33**

(84) Benannte Vertragsstaaten: **AT BE CH DE FR GB IT LI NL SE**

(71) Anmelder: **BAYER AG, Zentralbereich Patente, Marken und Lizenzen, D-5090 Leverkusen 1, Bayerwerk (DE)**

(72) Erfinder: **Kyri, Hans, Dr., Gerstenkamp 5, D-5000 Koeln 80 (DE)**
Erfinder: **Dobbers, Jürgen, Dr., Carl-Rumpff-Strasse 51, D-5090 Leverkusen 1 (DE)**
Erfinder: **Schultz, Karl-Heinz, Dr., Deswatinesstrasse 61, D-4150 Krefeld (DE)**

(54) **Fällmittel, Verfahren zu dessen Herstellung und dessen Verwendung zur Entphosphatisierung von Abwasser.**

(57) Die vorliegende Erfindung betrifft ein Fällmittel zur Fällung von Phosphationen und zur Flockung von Kolloiden im Abwasser sowie ein Verfahren zur Herstellung des Fällmittels und dessen Verwendung. Das Fällmittel enthält Eisen-(II)-sulfat, Eisen-(III)-sulfat, Aluminiumsulfat, gegebenenfalls Magnesiumsulfat, gegebenenfalls Titanylsulfat, Hydratwasser und gegebenenfalls einen Überschuss an Metalloxiden. Das Fällmittel wird hergestellt, indem Eisen-(II)-hydrogensulfat mit Eisen-(III)-oxid, das bei seiner Herstellung nicht über 850°C erhitzt wurde, vermischt und gegebenenfalls anschliessend auf Temperaturen bis zu 150°C erhitzt wird.

EP 0 033 903 A1

0033903

BAYER AKTIENGESELLSCHAFT
5090 Leverkusen, Bayerwerk
Je/bc/c
Zentralbereich,
Patente, Marken und Lizenzen

# Fällmittel, Verfahren zu dessen Herstellung und dessen Verwendung zur Entphosphatisierung von Abwasser

Die vorliegende Erfindung betrifft ein Fällmittel zur Fällung von Phosphationen und zur Flockung von Kolloiden im Abwasser sowie ein Verfahren zur Herstellung des Fällmittels und dessen Verwendung.

Abwässer, insbesondere kommunale Abwässer, enthalten zum großen Teil gelöste Phosphate, die zu einem stark vermehrten Algenwachstum in stehenden oder langsam fließenden Gewässern führen. Durch Eliminierung der gelösten Phosphate kann diese Eutrophierung der Gewässer unterbunden werden. Üblicherweise liegt der Gehalt an löslichen Phosphaten in den kommunalen Abwässern im Bereich von umgerechnet 10 bis 30 ppm Phosphor. Solche Abwässer enthalten außerdem organische Kolloide, die auch bei einer biologischen Reinigung nur in geringem Umfang abgebaut werden können.

Es ist bekannt, daß man den Gehalt an löslichen Phosphaten im Abwasser durch Fällung mit Aluminium- oder Eisensalzen stark vermindern kann. Diese Fällungen erfolgen

üblicherweise in einem pH-Bereich von 5,5 bis 7,0 und ergeben flockige, voluminöse Niederschläge, die sich z.B. durch Sedimentation oder Filtration nur sehr schlecht abscheiden lassen. Der sedimentierte Schlamm hat üblicherweise nur einen Feststoffgehalt von unter 1 Gew.-%. Derart gereinigtes Abwasser besitzt noch einen Gehalt von umgerechnet 0,5 bis 3,0 ppm Phosphor.

Desweiteren ist eine Phosphatelimination mittels Calciumhydroxid im alkalischen Bereich bei pH-Werten von über 9,5 aus Klages, Meyer: GWF-Wasser, 116 (1975), S. 370-372 bekannt. Sie führt zu niederigen Endkonzentrationen an Phosphat im Ablauf (unter 1 ppm Phosphor), erfordert aber auch eine nachträgliche Neutralstellung des Abwassers, z.B. durch Einleiten von Kohlendioxid.

Phosphatfällungen, die mit Eisen-(II)-sulfat durchgeführt werden, sedimentieren nur sehr schlecht. Erst nach einer Oxidation des Eisens zur dreiwertigen Stufe wird das gefällte Phosphat durch Sedimentation besser abscheibar.

Nach diesem bekannten Verfahren werden also Niederschläge erhalten, die nur sehr schwer absitzen und sich auch schlecht filtrieren lassen. Die sedimentierten Schlämme müssen deshalb in einer weiteren Stufe aufkonzentriert und anschließend üblicherweise mit einem Feststoffgehalt von ca. 30 % deponiert werden. Die Nachbehandlung der Schlämme ist daher einer der wichtigsten ökonomischen Faktoren beim Betrieb von kommunalen Kläranlagen. Ferner ist bekannt, daß man organische Kolloide durch Flockung mit Aluminium- oder

Eisen-(III)-salzen aus Abwasser entfernen kann. Solche Flockungen sind sowohl bei der Aufbereitung von Trinkwasser als auch bei der Aufbereitung von Abwasser üblich. Auch hierbei spielt der Feststoffgehalt des entstandenen Schlammes eine wesentliche wirtschaftliche Rolle in dem Verfahren. Unter wirtschaftlichen Gesichtspunkten muß ein gutes Fäll- oder Flockungsmittel einerseits ein möglichst niedriges Schlammvolumen verursachen, andererseits muß der Schlamm jedoch auch einen hohen Feststoffgehalt aufweisen.

Bei der großen Bedeutung welche die Phosphateliminierung im Abwasser besitzt, besteht ein dringender Bedarf an Fällmitteln, die einerseits preisgünstig einstehen und andererseits einen Schlamm ergeben, der sich möglichst energiesparend aufarbeiten läßt.

In der DE-OS 2 728 047 wird die Oxidation von Eisen-(II)-sulfat mit Luft im Wirbelbett zu einem basischen Eisen-(III)-sulfat und dessen Umsetzung in einem weiteren Verfahrensschritt mit Schwefelsäure zu Eisen-(III)-sulfat beschrieben. Die Umsetzung des basischen Eisen-(III)-sulfates erfolgt mit einem deutlichen Überschuß an Schwefelsäure. Das Verfahren ist mit 3 Stufen relativ aufwendig und ergibt außerdem ein Produkt, welches freie Schwefelsäure enthält.

Nach der Lehre der DE-OS 2 308 467 wird Eisen-(III)-sulfat aus Eisen-(III)-oxid und Schwefelsäure hergestellt, indem man zu einer Mischung aus Eisen-(III)-oxid und der unterstöchiometrischen Menge Schwefel-

säure die fehlende Menge an Schwefelsäure in Form von Oleum zusetzt. Die Verdünnungswärme des Oleums dient dabei als Energiequelle für die Reaktion. Außerdem ist es notwendig, durch das Reaktionsgemisch einen Luftstrom zu leiten, damit die Masse nicht zu einem harten Block erstarrt. Vorteilhafterweise wird der Luftstrom sogar vorgeheizt, um die Reaktion überhaupt bis zum Ende durchführen zu können. Eine Trennung des Eisen-(III)-sulfates von den unlöslichen Anteilen ist jedoch unumgänglich, um ein brauchbares Fällmittel zu erhalten. Dieses Verfahren ist sehr aufwendig und mit großen Korrosionsproblemen behaftet.

Nach der Lehre der DE-OS 1 592 104 wird der bei der Herstellung von Aluminiumoxid nach dem Bayer-Verfahren anfallende Rotschlamm mit einer unterstöchiometrischen Menge an Schwefelsäure aufgeschlossen. Das Reaktionsprodukt besteht im wesentlichen aus Eisen-(III)-, Aluminiumsulfat und nichtaufgeschlossenen Oxidresten sowie Natriumsulfat. Dieses relativ einfach herzustellende Verfahrensprodukt ergibt ein Fällmittel, das einen beachtlichen Anteil unwirksamer Ballaststoffe, darunter sogar lösliche Alkalisulfate, enthält.

Nach dem in der US-PS 3 954 953 beschriebenen Verfahren wird Eisen-(III)-oxid in wäßriger Suspension mit einer unterstöchiometrischen Menge Schwefelsäure umgesetzt und das Reaktionsprodukt anschließend getrocknet. Auf dieses getrocknete Material wird erneut Schwefelsäure aufgetragen und die Reaktion der Schwefelsäure mit dem restlichen Eisenoxid unter Erwärmen fortgesetzt. Trotz einer Reaktionstemperatur

von ca. 180°C werden nur ca. 90 % des Eisen-(III)-oxides zu Eisen-(III)-sulfat umgesetzt. Eine vollständige Umsetzung von Eisen-(III)-oxid mit Schwefelsäure ist also sehr schwierig.

Alle bisherigen Bemühungen zur Herstellung eines Fäll- und Flockungsmittels haben zum Ziel, Salze des dreiwertigen Eisens mit einem möglichst geringen Anteil an zweiwertigen Eisensalzen herzustellen.

Es wurde nun gefunden, daß ein speziell hergestelltes Gemisch aus Eisen-(II)-sulfat, Eisen-(III)-sulfat, Aluminiumsulfat und gegebenenfalls Magnesiumsulfat und Titanylsulfat ein wirksames Fällmittel für Phosphationen ist und gleichzeitig auch ein gutes Flockungsmittel für kolloide organische Stoffe darstellt. Die Fällung der Phosphationen erfolgt besonders rasch und zuverlässig, wenn die o.g. Sulfate in dem Gemisch als Hydrate mit mindestens einem Mol Wasser pro Mol Sulfat vorliegen. Überraschenderweise wurde gefunden, daß dieses speziell hergestellte Gemisch der hydratisierten Sulfate beim Fällen von Phosphationen einen gut sedimentierenden Schlamm ergibt, dessen Feststoffgehalt wesentlich höher liegt als der eines aus den Einzelkomponenten additiv zusammengesetzten Gemisches einzelner Sulfate oder deren Hydrate.

Gegenstand der vorliegenden Erfindung ist daher ein spezielles Fällmittel, enthaltend folgende hydratisierte Sulfate:

Eisen-(II)-sulfat, 10 bis 50 Gew.-%, vorzugsweise 15 bis 35 Gew.-%, besonders bevorzugt 20 bis 33 Gew.-%; Eisen-(III)-sulfat, 16 bis 50 Gew.-%, vorzugsweise 18 bis 40 Gew.-%, besonders bevorzugt 20 bis 35 Gew.-%; Aluminiumsulfat, 2 bis 15 Gew.-%, vorzugsweise 3 bis 12 Gew.-%, besonders bevorzugt 5 bis 10 Gew.-%; Magnesiumsulfat, 0 bis 10 Gew.-%, vorzugsweise 3 bis 10 Gew.-%, besonders bevorzugt 5 bis 8 Gew.-%; Titanylsulfat, 0 bis 10 Gew.-%, vorzugsweise 3 bis 10 Gew.-%, besonders bevorzugt 5 bis 8 Gew.-%; Hydratwasser, 5 bis 30 Gew.-%, vorzugsweise 8 bis 28 Gew.-%, besonders bevorzugt 12,5 bis 25 Gew.-% und gegebenenfalls einen Überschuß an Metalloxiden in einer Menge bis zu 25 Gew.-%, bezogen auf die gesamte Mischung.

Gegenstand der vorliegenden Erfindung ist ferner die Verwendung des speziellen Fällmittels mit der oben angegebenen Zusammensetzung als Flockungsmittel in der Wasseraufbereitung und bei der Behandlung von Abwasser.

Die vorliegende Erfindung betrifft auch ein Verfahren zur Herstellung dieses speziellen Fäll- und Flockungsmittels, welches dadurch gekennzeichnet ist, daß man ca. 1 Mol Eisen-(II)-hydrogensulfat, vorzugsweise der Zusammensetzung

$$FeSO_4 \cdot H_2SO_4$$

mit 0,6 bis 1,0 Mol Eisen-(III)-oxid, welches bei seiner Herstellung nicht über 850°C erhitzt wurde, vermischt

0033903

und die Mischung anschließend auf Temperaturen bis zu ca. 150°C erhitzt.

Als Eisen-(II)-hydrogensulfat können technische Abfallprodukte eingesetzt werden, die neben der Verbindung $FeSO_4 \cdot H_2SO_4$ noch andere Sulfate und als Kristallwasser gebundenes Wasser enthalten. Als Eisen-(III)-oxid können technische Abfallprodukte verwendet werden, die vorzugsweise aus $Fe_2O_3$ oder den Oxidhydraten des dreiwertigen Eisens bestehen und gegebenenfalls Eisen-(II)-sulfat und/oder Eisen-(III)-sulfat enthalten.

Besonders gut geeignet sind Produkte aus der Abröstung von technischem Eisen-(II)-sulfat, soweit das Abrösten bei Temperaturen unterhalb von 850°C stattgefunden hat. Ganz besonders gut geeignet ist das durch oxidative thermische Behandlung von $FeSO_4 \cdot 1\ H_2O$ erhaltene Produkt, das in der Literatur häufig als "basisches Eisen-(III)-sulfat" bezeichnet wird.

Auch das durch Eindampfen der bei der Herstellung von Titandioxid anfallenden Dünnsäuren auskristallisierende Salzgemisch, das sogenannt Filtersalz, das zu ca. 50 Gew.-% aus Eisen-(II)-hydrogensulfat, $FeSO_4 \cdot H_2SO_4$ besteht, läßt sich gut im Sinne der vorliegenden Erfindung als eine Komponente des Fällmittels verwenden. Ein solches abfiltriertes Sulfatgemisch kann beispielsweise folgende Zusammensetzung haben:

| | |
|---|---|
| $FeSO_4 \cdot H_2SO_4$ | 45 bis 65 Gew.-% |
| $Al_2(SO_4)_3$ | 5 bis 15 Gew.-% |

| | | |
|---|---|---|
| $TiOSO_4$ | 5 bis 10 Gew.-% |
| $MgSO_4$ | 5 bis 15 Gew.-% |
| Wasser gebunden | 15 bis 25 Gew.-% |

Bei der Herstellung des erfindungsgemäßen Fällmittels ist die Reaktion von Eisen-(II)-hydrogensulfat mit Eisenoxid oder mit dem basischen Eisen-(III)-sulfat, ohne daß die Reaktionsmischung verflüssigt werden muß, völlig unerwartet. Im Vergleich dazu reagiert Eisen-(II)-hydrogensulfat mit Aluminiumhydroxid oder mit Aluminiumoxid, selbst bei äußerer Wärmezufuhr nur in sehr geringen Anteilen. Ein typisches Hydrogensulfat, das Kaliumhydrogensulfat, reagiert unterhalb seines Schmelzbereiches mit Eisen-(III)-oxid praktisch überhaupt nicht.

Wie aus den nachfolgenden Beispielen zu ersehen ist, reagiert ein technisches Eisenhydrogensulfat mit Eisenoxid, jedoch nur soweit dieses nicht über 850°C erhitzt wurde oder mit basischem Eisen-(III)-sulfat spontan beim Vermischen. Die Reaktion läuft mit etwa stöchiometrischen Mengen an Eisenoxid oder basischem Eisen-(III)-sulfat unter Erwärmen praktisch vollständig ab. Andere hydratisierte Sulfate, wie sie im technischen Eisen-(II)-hydrogensulfat vorkommen, stören diese Umsetzung nicht.

Die Umsetzung des Eisen-(II)-hydrogensulfates mit dem Eisen-(III)-oxid oder dem basischen Eisen-(III)-sulfat kann beschleunigt werden, wenn man das Reaktionsgemisch durch äußere Energiezufuhr auf 100 bis 150°C erwärmt.

Eine Erwärmung über diesen Temperaturbereich hinaus führt zu einer teilweisen Entwässerung der Sulfathydrate und zu einer Verminderung der Reaktionsfähigkeit mit gelösten Phosphaten.

Wird die Reaktion, wie üblich, unter freiem Zutritt von Luft durchgeführt, so kann es zu einer teilweisen Oxidation des zweiwertigen Einsensulfates in dem Gemisch kommen. Eine solche Oxidation hat keinen Einfluß auf die Wirkungsweise des Fällmittels.

Es entsteht dabei ein Gemisch hydratisierter Sulfate, das ein vorzügliches Fällmittel für Phosphationen und ein Flockungsmittel für organische Kolloide darstellt. Der besondere Vorteil dieses Fällmittels besteht in der Bildung eines Fällschlammes mit einem ungewöhnlich niedrigen Schlammindex, im Vergleich zu den bisher als Fällmittels benützten leichtlöslichen Salzen des Aluminiums und des dreiwertigen Eisens. Gemische leichtlöslicher, hydratisierter Salze, die in ihrer analytischen Zusammensetzung dem erfindungsgemäß hergestellten Fällmittel entsprechen, zeigen überraschenderweise einen wesentlich höheren Schlammindex als das Fällmittel.

Bei der Durchführung der Phosphatfällung mit dem erfindungsgemäßen Fällmittel tritt nur eine unwesentliche pH-Verschiebung im Abwasser ein, da die üblicherweise vorhandenen Härtebildner die freigesetzte Schwefelsäure weitgehend neutralisieren. Überraschenderweise kann die Abscheidung der Phosphatflocken wesentlich verbessert und ihre Sedimentation beschleunigt werden, wenn man nach dem Zusatz des Fällmittels den

pH-Wert des Abwassers durch Zusatz alkalischer Stoffe, z.B. einer Suspension von Calciumhydroxid, auf einen Wert von ca. 7 bis 8,0 einstellt. Obwohl dieser pH-Wert außerhalb der in der Literatur (Gleisberg, Kandler, Ulrich und Hartz, Angewandte Chemie, 88 (1976), Seiten 354-365) angegebenen optimalen pH-Bereiche für die Phosphatfällung mit Aluminiumsalzen oder mit dreiwertigen Eisensalzen und auch außerhalb des pH-Bereiches für eine Fällung mit Calciumsalzen liegt, tritt durch diese Maßnahme eine Verbesserung in der Fällwirkung des erfindungsgemäßen Fällmittels ein.

Die gleiche Maßnahme, also die Neutralisation der im Fällmittel enthaltenen Sulfationen mittels Calciumhydroxid nach dem Zusatz des Fällmittels zum Abwasser, hat bei Aluminiumsulfat oder bei Eisen-(III)-sulfat weder auf die Flockenbildung noch auf die Phosphatfällung einen nachweisbaren Einfluß.

Die vorliegende Erfindung soll durch die nachfolgenden Beispiele noch weiter erläutert werden.

Beispiel 1

In einem Mischaggregat (Schaufelmischer) wurden 100 kg eines Sulfatgemisches aus der Aufarbeitung der Dünnsäure aus der Titandioxidherstellung mit 12 kg eines bei 700°C hergestellten Röstproduktes aus der Zersetzung von Eisen-(II)-sulfat 15 Minuten lang gemischt.

Das Sulfatgemisch war ein technisches Eisen-(II)-hydrogensulfat folgender Zusammensetzung:

| | |
|---|---|
| $FeSO_4 \cdot H_2SO_4$ | 48,0 Gew.-% |
| $FeSO_4$ | 5,2 Gew.-% |
| $Al_2(SO_4)_3$ | 10,6 Gew.-% |
| $TiOSO_4$ | 6,6 Gew.-% |
| $MgSO_4$ | 9,0 Gew.-% |
| $H_2O$ gebunden | 20,6 Gew.-% |

Das Röstprodukt hatte folgende Zusammensetzung:

| | |
|---|---|
| $Fe_2O_3$ | 70 Gew.-% |
| $FeSO_4$ | 13 Gew.-% |
| $Fe_2(SO_4)_3$ | 13 Gew.-% |
| $MgSO_4$ | 4 Gew.-% |

Nach einer Mischdauer von 15 Minuten wurde das Gemisch in einen Behälter abgefüllt. Das Gemisch erwärmte sich nach etwa 20 Minuten und erreichte nach einer Stunde eine Temperatur von ca. 80°C. Hierbei veränderte sich die Farbe von rotbraun nach "schmutziggrün". Das Eisen-(III)-oxid wurde dabei zu Eisen-(II)-sulfat umgesetzt. Nach dem Abkühlen stellte dieses Re-

0033903

aktionsprodukt ein wirksames Fällmittel für Phosphationen und ein Flockungsmittel für organische Kolloide aus wäßrigen Lösungen, beispielsweise aus Abwasser, dar.

Es entspricht etwa folgender Zusammensetzung:

| | |
|---|---|
| $FeSO_4$ | 32 Gew.-% |
| $Fe_2(SO_4)_3$ | 24 Gew.-% |
| $Al_2(SO_4)_3$ | 9 Gew.-% |
| $TiOSO_4$ | 6 Gew.-% |
| $MgSO_4$ | 8 Gew.-% |
| $H_2O$ gebunden | 21 Gew.-% |

Beispiel 2

In einem Schaufelmischer wurden 100 kg eines Sulfatgemisches der gleichen Zusammensetzung wie in Beispiel 1 mit 33 kg eines bei 700°C hergestellten Röstproduktes der gleichen Zusammensetzung wie in Beispiel 1 gemischt. Der Mischvorgang dauerte 60 Minuten. Während der gesamten Mischdauer war der freie Zutritt von Luft zu der Mischung gesichert.

Die Mischung erwärmte sich durch die Reaktionswärme auf 80°C. Infolge des Überschusses an Eisen-(III)-oxid hatte das Endprodukt eine rotbraune Farbe.

Es entstand ein Fällmittel der folgenden Zusammensetzung:

| | |
|---|---|
| $FeSO_4$ | 22 Gew.-% |
| $Fe_2(SO_4)_3$ | 27 Gew.-% |
| $Al_2(SO_4)_3$ | 9 Gew.-% |
| $TiOSO_4$ | 6 Gew.-% |
| $MgSO_4$ | 8 Gew.-% |
| unlöslicher Rückstand | 8 Gew.-% |
| Wasser gebunden | 18 Gew.-% |

Infolge einer Teiloxidation des $FeSO_4$ war gegenüber der errechneten Zusammensetzung ein höherer Gehalt an $Fe_2(SO_4)_3$ und ein geringerer Gehalt an $FeSO_4$ zu verzeichnen. Das Fällmittel war sehr wirksam beim Ausfällen von Phosphationen und stellte ein gutes Flokkungsmittel für organische Kolloide aus wäßrigen Lösungen dar.

Beispiel 3

In einem Mischaggregat wurden 100 kg eines Sulfatgemisches der gleichen Zusammensetzung wie im vorhergehenden Beispiel mit 28 kg eines Eisen-(II)-sulfatabbrandes der folgenden Zusammensetzung gemischt:

| | |
|---|---|
| $FeSO_4$ | 15 Gew.-% |
| $Fe_2(SO_4)_3$ | 50 Gew.-% |
| $Fe_2O_3$ | 35 Gew.-% |

Nach dem Abfüllen des Gemisches in einen Behälter erhitzte sich dieses durch die Reaktionswärme auf ca. 80°C.

Das Reaktionsprodukt war ein schutzig-grünes, körniges Material folgender Zusammensetzung:

| | |
|---|---|
| $FeSO_4$ | 30 Gew.-% |
| $Fe_2(SO_4)_3$ | 30 Gew.-% |
| $Al_2(SO_4)_3$ | 8 Gew.-% |
| $TiOSO_4$ | 5 Gew.-% |
| $MgSO_4$ | 7 Gew.-% |
| $H_2O$ gebunden | 19 Gew.-% |

Das Wasser ist als Kristallwasser an die Sulfate gebunden. Dieses Reaktionsprodukt stellte ein wirksames Fällmittel dar.

<u>Beispiel 4</u>

In einem Schaufelmischer wurden 100 kg eines Sulfatgemisches der gleichen Zusammensetzung wie in Beispiel 1 mit 11 kg eines Eisenoxidhydrates der Formel FeOOH 15 Minuten lang gemischt.

Nach dem Mischen wurde das Gemisch 30 Minuten lang auf einer Temperatur von 100°C gehalten. Es entstand ein hochwertiges Fällmittel für Phosphat von körniger Struktur und graugrüner Farbe.

Ohne die Temperung bei 100°C ist die Reaktion zu dem gleichen Fällmittel nach ca. 4 Stunden beendet. Die Temperatur stieg dabei durch die Reaktionswärme auf ca. 70°C.

Das Endprodukt hat in beiden Fällen die folgende Zusammensetzung:

| | |
|---|---|
| $FeSO_4$ | 33,0 Gew.-% |
| $Fe_2(SO_4)_3$ | 24,0 Gew.-% |
| $Al_2(SO_4)_3$ | 8,0 Gew.-% |
| $TiOSO_4$ | 6,0 Gew.-% |
| $MgSO_4$ | 8,0 Gew.-% |
| $H_2O$ | 21,0 Gew.-% |

Vergleichsbeispiele

In einem Becherglas von 2 l Inhalt wurden 1000 ml eines Leitungswassers mit 13° deutscher Härte mit soviel Mononatriumdihydrogenphosphatdihydrat versetzt, daß eine Lösung mit umgerechnet 10 ppm P entsteht. In diese Lösung wurde das in jeweils den folgenden Beispielen angegebene Fällmittel eingerührt. Die mit dem Fällmittel versetzte Lösung wurde 30 Minuten langsam gerührt. Anschließend wurde die gesamte Lösung in ein kegelförmiges Absetzgefäß von einem Liter Fassungsvermögen mit kalibriertem Bodenteil (Imhoff-Trichter) überführt. Der Trübungsanteil der ruhenden Lösung flockte nach einiger Zeit aus und sammelte sich als Sediment in dem spitz zulaufenden kalibrierten Bodenteil des Gefäßes.

Nach 2 Stunden Sedimentationszeit wurde das Schlammvolumen abgelesen. Nach 1 Stunde wurde aus der Lösung eine Probe entnommen, filtriert und in dem Filtrat der Restphosphorgehalt bestimmt.

Aus der Zusammensetzung des Fällmittels wurde die Menge des entstandenen Schlammes errechnet. Daraus und aus dem abgelesenen Schlammvolumen wurde der Schlammvolumenindex berechnet. Der Schlammvolumenindex ließ sich auch bei kleinen Ansätzen relativ einfach berechnen, wenn man bei einer 90 %igen Phosphatelimination das Fällprodukt aus den Eisen- und Aluminiumsalzen errechnete und das Schlammvolumen in einem kalibrierten Absetzgefäß maß.

Das Fällprodukt entspricht der Formel:

$$(Me^{III}OH)_3 \cdot (PO_4)_2 \qquad Me^{III} = \text{Al oder Fe}$$

Theoretisch ergaben sich aus den wichtigsten Fällmitteln für Phosphationen folgende Anteile an Schlamm:

| | |
|---|---|
| $FeSO_4$ | 89,7 Gew.-% Schlamm |
| $Fe_2(SO_4)_3$ | 68,3 Gew.-% |
| $Al_2(SO_4)_3$ | 62,6 Gew.-% |

Das so errechnete Schlammgewicht verschob sich nur unwesentlich, wenn bei einer 90 %igen Phosphatfällung ein Anteil von 10 % der fällenden Kationen als Oxidhydrate ausfielen.

Das Fällprodukt aus Eisen-(II)-sulfat entsprach nach der immer auftretenden Oxidation durch den im Wasser gelösten Sauerstoff der oben angegebenen Formel für dreiwertiges Eisen.

Die in den folgenden Vergleichsbeispielen verwendeten Fällmittel waren wie folgt gekennzeichnet:

5. Eisen-(III)-sulfat rein, Handelschemikalie, mit 81,5 % $Fe_2(SO_4)_3$ und 18,5 % $H_2O$, mit feinkörnigem kugeligem Korn, im Wasser sehr schnell löslich.

6. $Al_2(SO_4)_3$, 18 $H_2O$ rein, Handelsware.

7. Technisches Al-sulfat, nach Angaben des Herstellers mit folgender Zusammensetzung:
15 % $Al_2O_3$ entsprechend 49 Gew.-% $Al_2(SO_4)_3$
2,3 % $Fe_2O_3$ entsprechend 5,7 Gew.-% $Fe_2(SO_4)_3$
1,0 % $SiO_2$
35,0 % $SO_3$

8. 59 mg $Fe_2(SO_4)_3$ 81,5 %ig
67 mg $FeSO_4 \cdot 7\ H_2O$

9. 140 mg einer Mischung aus:
190 g $FeSO_4 \cdot 1\ H_2O$
135 g $Fe_2(SO_4)_3$ . 81,5 %ig
87,5 g $Al_2(SO_4)_3 \cdot 18\ H_2O$
82,0 g $MgSO_4 \cdot 7\ H_2O$
78 g einer technischen Titanylsulfatlösung.

Die analytische Zusammensetzung dieser Mischung entsprach dem Fällmittel im Vergleichsbeispiel 10.

10. Fällmittel nach Beispiel 1.

11. Fällmittel nach Beispiel 2.

12. Fällmittel nach Beispiel 3.

13. Fällmittel nach Beispiel 4.

Tabelle der Vergleichsbeispiele

| | Fällmittel | Menge | $Me^{III}$: p | pH-Wert | Rest an P | Feststoff berechnet | Schlamm-volumen | Schlamm-volumen-index |
|---|---|---|---|---|---|---|---|---|
| | | mg/l | | | ppm | g | ml | ml/g |
| 5 | $Fe_2(SO_4)_3$ | 98 | 1,5:1 | 7,2 | 0,7 | 0,067 | 34 | 500 |
| 6 | $Al_2(SO_4)_3$ | 82 | 1,5:1 | 7,8 | 0,7 | 0,052 | 22 | 420 |
| 7 | techn. Al-sulfat | 150 | 1,5:1 | 7,2 | 1,0 | 0,052 | 18 | 350 |
| 8 | Gemisch $Fe^{II}$-sulfat und $Fe^{III}$-sulfat | | 1,5:1 | 6,6 | 0,9 | 0,065 | 22 | 330 |
| 9 | Gemisch wie Beispiel 1 | | 1,5:1 | 6,8 | 0,5 | 0,068 | 20 | 300 |
| 10 | Fällmittel Beispiel 1 | 130 | 1,5:1 | 7,1 | 0,5 | 0,068 | 11 | 160 |
| 11 | Fällmittel Besipiel 2 | 150 | 1,5:1 | 7,2 | 1,0 | 0,068 | 13 | 200 |
| 12 | Fällmittel Besipiel 3 | 130 | 1,5:1 | 7,2 | 0,7 | 0,068 | 13 | 200 |
| 13 | Fällmittel Besipiel 4 | 130 | 1,5:1 | 7,0 | 0,8 | 0,068 | 14 | 210 |

Patentansprüche

1) Fällmittel, enthaltend folgende hydratisierte Metallsulfate:

Eisen-(II)-sulfat, 10 bis 50 Gew.-%, vorzugsweise 15 bis 35 Gew.-%;
Eisen-(III)-sulfat, 16 bis 50 Gew.-%, vorzugsweise 18 bis 40 Gew.-%;
Aluminiumsulfat, 2 bis 15 Gew.-%, vorzugsweise 3 bis 12 Gew.-%;
Magnesiumsulfat, 0 bis 10 Gew.-%, vorzugsweise 3 bis 10 Gew.-%;
Titanylsulfat, 0 bis 10 Gew.-%, vorzugsweise 3 bis 10 Gew.-%;
Hydratwasser, 5 bis 30 Gew.-%, vorzugsweise 8 bis 28 Gew.-% und gegebenenfalls einen Überschuß an Metalloxiden bis zu 25 Gew.-%, bezogen auf die gesamte Mischung.

2) Fällmittel nach Anspruch 1, enthaltend folgende hydratisierte Metallsulfate:

Eisen-(II)-sulfat, 20 bis 33 Gew.-%;
Eisen-(III)-sulfat, 20 bis 35 Gew.-%;
Aluminiumsulfat, 5 bis 10 Gew.-%;
Magnesiumsulfat, 5 bis 8 Gew.-%;
Titanylsulfat, 5 bis 8 Gew.-%;
Hydratwasser, 12,5 bis 25 Gew.-% und gegebenenfalls einen Überschuß an Metalloxiden bis zu 25 Gew.-%.

0033903

3) Verwendung des Fällmittels mit der im Anspruch 1 oder 2 angegebenen Zusammensetzung bei der Behandlung von Abwasser.

4) Verwendung des Fällmittels mit der im Anspruch 1 oder 2 angegebenen Zusammensetzung als Flockungsmittel.

5) Verwendung des Fällmittels mit der im Anspruch 1 oder 2 angegebenen Zusammensetzung zur Fällung von Phosphationen.

6) Verwendung des Fällmittels mit der im Anspruch 1 oder 2 angegebenen Zusammensetzung als Flockungsmittel für kolloide organische Stoffe.

7) Verfahren zur Herstellung eines Fällmittels, dadurch gekennzeichnet, daß man ca. 1 Mol Eisen-(II)-hydrogensulfat, vorzugsweise der Zusammensetzung

$$FeSO_4 \cdot H_2SO_4 ,$$

mit ca. 0,6-1 Mol Eisen-(III)-oxid, das bei seiner Herstellung nicht über 850°C erhitzt wurde, vermischt und gegebenenfalls anschließend auf Temperaturen bis zu 150°C, vorzugsweise 70 bis 150°C, erhitzt.

8) Verfahren nach Anspruch 7, dadurch gekennzeichnet, daß bei der Mischung bzw. der anschließenden Erhitzung Luft zugeführt wird.

9) Verfahren nach Ansprüchen 7 oder 8, dadurch gekennzeichnet, daß die Reaktanden in fester Form miteinander vermischt werden.

10) Verfahren nach einem oder mehreren der Ansprüche 7 bis 9, dadurch gekennzeichnet, daß solches Eisen-(III)-oxid eingesetzt wird, das bei seiner Entstehung nicht über 850°C erhitzt wurde.

0033903

Europäisches Patentamt

# EUROPÄISCHER RECHERCHENBERICHT

Nummer der Anmeldung
EP 81100614.7

| Kategorie | EINSCHLÄGIGE DOKUMENTE<br>Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| P | DE - A1 - 2 843 053 (BAYER) (24-04-1980)<br>+ Ansprüche 1,3; Seite 5, Zeilen 19-29; Seite 6, Zeilen 1-9; Seite 10, Zeilen 1-14; Seiten 11-15 +<br>& EP-A1-0 009 718 (16-04-1980)<br>-- | 1-3,5 | C 02 F 1/58<br>B 01 D 21/01 |
| | AT - B - 143 455 (GUGGENHEIM)<br>+ Seite 2, Zeilen 25-32 +<br>-- | 1-3 | |
| | DE - C - 124 374 (GSELL)<br>+ Anspruch; Seite 2, linke Spalte, Absatz 1 +<br>-- | 1-3 | RECHERCHIERTE SACHGEBIETE (Int. Cl.³)<br>C 02 F<br>B 01 D |
| | CH - A - 227 986 (LICENTIA)<br>+ Seite 2, linke Spalte, Zeilen 14-17 +<br>---- | 1-3 | |

KATEGORIE DER GENANNTEN DOKUMENTE
X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 06-05-1981 | WILFLINGER |